# EUROPEAN PATENT SPECIFICATION

(11) **EP 3 735 133 B1**
(45) Date of publication and mention of the grant of the patent: **03.05.2023**
(21) Application number: 18829870.7
(22) Date of filing: 21.12.2018
(51) Int. Cl.: A23K 10/30, A23K 10/37, A23K 50/10, A23L 13/70

(54) **A FEEDSTOCK, A PROCESS FOR MAKING A FEEDSTOCK, AND USE OF THE FEEDSTOCK**
AUSGANGSMATERIAL, VERFAHREN ZUR HERSTELLUNG EINES AUSGANGSMATERIALS UND VERWENDUNG DES AUSGANGSMATERIALS
MATIÈRE PREMIÈRE, PROCÉDÉ DE PRÉPARATION D'UNE MATIÈRE PREMIÈRE ET UTILISATION DE LA MATIÈRE PREMIÈRE

(30) Priority: 05.01.2018 GB 201800206; 20.08.2018 GB 201813526
(43) Date of publication of application: 11.11.2020
(73) Proprietor: THE OLIVE FEED CORPORATION LIMITED, A96 D8C2 Co. Dublin Glenageary (IE)
(72) Inventor: DUNNE, Gavin, Edenderry, Co. Offaly (IE); DUNNE, Bryan, Edenderry, Co. Offaly (IE)
(74) Representative: Tomkins & Co
(86) International application number: PCT/EP2018/086663
(87) International publication number: WO 2019/134865

(56) References cited:
- WO-A1-2006/043117
- S. TERRAMOCCIA ET AL: "Use of Dried Stoned Olive Pomace in the Feeding of Lactating Buffaloes: Effect on the Quantity and Quality of the Milk Produced", ASIAN-AUSTRALASIAN JOURNAL OF ANIMAL SCIENCES., vol. 26, no. 7, 1 July 2013 (2013-07-01), pages 971-980, XP055558132, KR ISSN: 1011-2367, DOI: 10.5713/ajas.2012.12627
- JOSÉ S. TORRECILLA ET AL: "Improvement of fluidized-bed dryers for drying solid waste (olive pomace) in olive oil mills", EUROPEAN JOURNAL OF LIPID SCIENCE AND TECHNOLOGY., vol. 108, no. 11, 1 November 2006 (2006-11-01), pages 913-924, XP055558152, DE ISSN: 1438-7697, DOI: 10.1002/ejlt.200600121
- MARGARITA HUSSAM AHMAD-QASEM ET AL: "Influence of air temperature on drying kinetics and antioxidant potential of olive pomace", JOURNAL OF FOOD ENGINEERING, vol. 119, no. 3, 1 December 2013 (2013-12-01), pages 516-524, XP055558164, GB ISSN: 0260-8774, DOI: 10.1016/j.jfoodeng.2013.06.027
- Adel Awad ET AL: "Olive Oil Waste Treatment", , 1 January 2000 (2000-01-01), XP055558084, Retrieved from the Internet: URL:https://edisciplinas.usp.br/pluginfile .php/1898957/mod_folder/content/0/material %20para%20a%20elaboração%20de%20projetos/O live%20Oil%20Waste%20Treatment.pdf?forcedo wnload=1 [retrieved on 2019-02-18]

## Description

### Field of the Invention

The present invention relates to a feedstock, a process for making a feedstock, and a use of such feedstock. The feedstock is an animal feedstock from olive fruit in particular olive waste.

### Background to the Invention

Olive waste is produced during the production process for producing olive oil. Olive waste is produced in varying forms dependent on the type of production facility. Some olive waste is produced in a paste form. Olive waste may contain olive pulp, olive stone and olive seed.

Olive waste is treated dependent on local regulations. For example European Union regulations and Australian regulations require permits to dispose of olive waste because it is considered a pollutant. In some case regulations require the construction of lagoons and overflow lagoons in order to break down the waste, for example using enzymes, before the waste can be used as a compost. In the olive oil industry, olive waste is considered a burden because it cannot be sold for a profit by the olive oil mills and incurs significant cost in terms of adhering to processing and storage regulations that require onsite facilities such as lagoons, administration in terms of permits, labour in terms of removal and transport from the processing factory floor and transport and labour for final removal for composting. In the European Union where most of the world's olive is produced olive waste is classified as a waste product. WO 2006/043117 discloses processing of olive marc into meal intended for foodstuffs comprising three stages: removal of moisture from marc (drying), milling of dry marc into meal, and packing of meal. Terramoccia et al. (DOI: 10.5713/ajas.2012.12627) discloses the use of dried stoned olive pomace in the feeding of lactating buffaloes. Torrecilla et al. (DOI: 10.1002/ejlt.200600121) discloses improvement of fluidized-bed dryers for drying solid waste (olive pomace) in olive oil mills.

Olive waste therefore remains a waste product with associated disposal costs.

### Summary of the Invention

The present invention provides a feedstock for animals comprising caramelised olive fruit wherein the caramelised olive fruit has a moisture content of from 6 wt % to 15 wt%. The olive fruit desirably comprises olive flesh. The olive flesh may be in the form of olive pulp.

In the feedstock of the invention the olive fruit desirably comprises olive stones.

In the feedstock of the invention the olive fruit desirably comprises olive seeds.

In the feedstock of the invention the olive fruit desirably comprises at least two of olive flesh, olive stones, or olive seeds.

Desirably the olive fruit comprises olive flesh, olive stones, and olive seeds. This has been found to be a particularly nutritious feedstock.

In the feedstock of the present invention the olive fruit may be olive waste. This means that a product that was previously seen as a waste product now has a beneficial end-use.

In the feedstock of the present invention the olive fruit may be in the form of an olive paste.

The olive waste may be a by-product of olive oil extraction and, as stated above, may optionally be in paste form.

The olive waste may be a by-product of olive oil extraction and may optionally be olive pomace.

In the feedstock of the present invention the olive fruit may have a moisture content of from 50 wt% to 75 wt% as a percentage of the total weight of the olive fruit. The moisture content may be measured by thermogravimetric methods.

The moisture content of the olive fruit may be reduced during caramelisation. The caramelised olive fruit has a moisture content of from 6 wt% to 15 wt% as a percentage of the total weight of the caramelised olive fruit as measured by thermogravimetric methods. The moisture content of the olive fruit may be reduced by the heat applied to cause caramelisation of the olive fruit, that is when heat is applied to cause caramelisation of the olive fruit the heat applied also reduces the moisture content of the olive fruit. However olive fruit with a high moisture content, for example a moisture content of from 50 wt% to 75 wt%, may take an excessive length of time to process as the olive fruit must lose moisture prior to caramelising.

Advantageously the olive fruit which has a high moisture content, for example a moisture content of from 50 wt% to 75 wt%, is dried in a separate/independent drying process. The separate/independent drying process is separate/independent to the heating process which causes caramelisation. Beneficially this separate/independent drying process reduces the moisture content of the olive fruit prior to the application of heat required to caramelise the olive fruit therefore reducing the time required to cause caramelisation of the olive fruit. Furthermore it may significantly reduce the energy required to heat the olive fruit sufficiently to caramelise the olive fruit. In this separate/independent drying process the olive fruit may be dried by any means known in the art, for example by heating, by centrifugation, by steam or by freeze drying. For example when the moisture content of the olive fruit is reduced by heating in the separate/independent drying process the high moisture content of the olive fruit, for example a moisture content of from 50 wt% to 75 wt%, prevents the olive fruit from being caramelised during the separate/independent drying process. That is when the olive fruit is dried by the application of heat during the separate/independent drying process, the separate/independent drying process is stopped prior to reducing the moisture content of the olive fruit to a point where caramelisation of the olive fruit may occur. The olive fruit may be dried in the separate/independent drying process to a moisture content of from 16 wt% to 49 wt%, preferably to a moisture content of from 18 wt% to 25 wt% prior to being caramelised. A reduction in moisture content of the olive fruit to below 16 wt% is not generally desirable as the olive fruit may have a tendency to burn during subsequent caramelisation.

In the feedstock of the present invention the olive fruit may comprise olive stones, olive seeds and olive flesh, and the olive fruit may be separated into two parts: (i) olive stones and olive seeds; and (ii) olive flesh before the olive fruit is caramelised. Separating (i) the olive stones and olive seeds and (ii) the olive flesh allows the olive stones and olive seeds to be crushed separately from the olive flesh before the olive fruit is caramelised.

Where the olive fruit comprises olive stones and olive seeds, the olive stones and olive seeds may be crushed before the olive fruit is caramelised. Additional nutrition is available from the stones and seeds especially the seeds.

It will be appreciated that olive seeds may be within an olive stone.

In a feedstock of the invention the olive fruit may comprise crushed olive stones and olive seeds which are together but separate from olive flesh. The crushed olive stones and olive seeds and the separate olive flesh may be combined before the olive fruit is caramelised.

The caramelised olive fruit is caramelised by caramelisation at a temperature of from 110° C to 180° C, for example from 120° C to 180° C. Caramelisation will not occur at temperatures below 110° C.

Desirably the caramelised olive fruit is caramelised by heating (caramelisation) for 5 minutes to 80 minutes, for example from 50 minutes to 80 minutes.

Desirably the caramelised olive fruit is caramelised by heating (caramelisation) for 5 minutes to 30 minutes.

The caramelised olive fruit is caramelised while being agitated. Agitation prevents burning of the olive fruit, for example by preventing (localised) heating to above about 180° C.

Optionally the caramelised olive fruit is caramelised while being constantly agitated.

The caramelised olive fruit is desirably cooled subsequent to caramelisation. Cooling allows the caramelised olive fruit to be packaged in a suitable manner.

Advantageously the caramelised olive fruit may be separated from any contaminants which may be present in the caramelised olive fruit. The caramelised olive fruit may be passed through a screen or mesh prior to cooling. Alternatively the caramelised olive fruit may be passed through a screen or mesh while the caramelised olive fruit is cooling. Alternatively the caramelised olive fruit may be passed through a screen or mesh after cooling. The screen or mesh preferably has a mesh size of from 2mm to 10mm, preferably a mesh size of from 3mm to 9mm, wherein the mesh size defines the length and width of square apertures in the mesh. Advantageously passing the caramelised olive fruit through a screen or a mesh may remove any non-olive fruit contaminants which may have been present in the olive fruit. Advantageously passing the caramelised olive fruit through a screen or a mesh may remove olive stones (or pieces of olive stones) which may be present and may be too large to be considered easily digestible.

The caramelised olive fruit may be cooled for 1 minute to 120 minutes subsequent to the caramelisation, for example from 60 minutes to 120 minutes.

Suitably the caramelised olive fruit is cooled to below 20° C subsequent to caramelisation.

Suitably the caramelised olive fruit is cooled to from 10° C and 20° C subsequent to caramelisation.

The invention also relates to a process of making a feedstock for animals comprising the following steps:
(a) providing olive fruit
(b) drying the olive fruit to reduce the moisture content prior to caramelising the olive fruit, wherein said drying is carried out independently of caramelising the olive fruit,
(c) caramelising the olive fruit,

wherein the olive fruit is caramelised by caramelisation at a temperature of from 110° C to 180° C,
wherein the olive fruit is caramelised while being agitated, and
wherein the olive fruit is caramelised until the caramelised olive fruit has a moisture content of from 6 wt% to 15 wt%..

In a process of the invention the olive fruit may comprise olive flesh.

In a process of the invention the olive flesh may be in the form of olive pulp.

In a process of the invention the olive fruit desirably comprises olive stones.

In a process of the invention the olive fruit desirably comprises olive seeds.

In a process of the invention the olive fruit desirably comprises at least two of olive flesh, olive stones, or olive seeds.

In a process of the invention the olive fruit desirably comprises olive flesh, olive stones, and olive seeds.

In a process of the invention the olive fruit may be olive waste.

In a process of the invention the olive waste may be in the form of olive paste.

The olive waste may be a by-product of olive oil manufacture such as olive pomace.

In a process of the invention the olive fruit which is provided in step (a) may have a moisture content of from 50 wt% to 75 wt% as a percentage of the total weight of the olive fruit, the moisture content may be determined by thermogravimetric methods.

In a process of the invention the moisture content of the olive fruit provided in step (a) is reduced before being caramelised in step (c).

In the process of the invention the moisture content of the olive fruit may be reduced during caramelisation. The caramelised olive fruit has a moisture content of from 6 wt% to 15 wt% as a percentage of the total weight of the caramelised olive fruit as measured by thermogravimetric methods. The moisture content of the olive fruit may be reduced by the heat applied to cause caramelisation of the olive fruit, that is when heat is applied to cause caramelisation of the olive fruit the heat applied also reduces the moisture content of the olive fruit. However olive fruit with a high moisture content, for example a moisture content of from 50 wt% to 75 wt%, may take an excessive length of time to process as the olive fruit must lose moisture prior to caramelising.

Advantageously the olive fruit which has a high moisture content, for example a moisture content of from 50 wt% to 75 wt%, is dried in a separate/independent drying process. The separate/independent drying process is separate/independent to the heating process which causes caramelisation. This separate/independent drying process reduces the moisture content of the olive fruit prior to the application of heat required to caramelise the olive fruit therefore reducing the time required to cause caramelisation of the olive fruit. Furthermore it may significantly reduce the energy required to heat the olive fruit sufficiently to caramelise the olive fruit. In this separate/independent drying process the olive fruit may be dried by any means known in the art, for example by heating, by centrifugation, by steam or by freeze drying. For example when the moisture content of the olive fruit is reduced by heating in the separate/independent drying process the high moisture content of the olive fruit, for example a moisture content of from 50 wt% to 75 wt%, prevents the olive fruit from being caramelised during the separate/independent drying process. That is when the olive fruit is dried by the application of heat during the separate/independent drying process, the separate/independent drying process is stopped prior to reducing the moisture content of the olive fruit to a point where caramelisation of the olive fruit may occur. The olive fruit may be dried in the separate/independent drying process to a moisture content of from 16 wt% to 49 wt%, preferably to a moisture content of from 18 wt% to 25 wt% prior to being caramelised. A reduction in moisture content of the olive fruit to below 16 wt% is not generally desirable as the olive fruit may have a tendency to burn during subsequent caramelisation.

Where the olive fruit may comprise olive stones, olive seeds and olive flesh, the olive fruit may be separated into two parts: (i) olive stones and olive seeds; and (ii) olive flesh before the olive fruit is caramelised.

Where the olive fruit comprises olive stones and olive seeds suitably the olive stones and olive seeds are crushed before the olive fruit is caramelised.

Where the olive fruit is in two separate parts, a first part comprising crushed olive stones and olive seeds and a second part comprising olive flesh desirably the two parts are recombined before the olive fruit is caramelised. This means crushed olive stones and olive seeds are recombined with the olive flesh before the olive fruit is caramelised.

The reduction in moisture content may alternatively be performed once the crushed olive stones and olive seeds are recombined with the olive flesh and before the recombined material is caramelised. The reduction in moisture content of the recombined material may be achieved by the separate/independent drying process.

The caramelised olive fruit is caramelised by caramelisation at a temperature of from 110° C to 180° C, for example from 120° C to 180° C.

Preferably the caramelised olive fruit is caramelised by caramelisation at a temperature of from 140° C to 180° C

Desirably the caramelised olive fruit is caramelised by heating (caramelisation) for 5 minutes to 80 minutes, for example from 50 minutes to 80 minutes.

Preferably the caramelised olive fruit is caramelised by heating (caramelisation) for 5 minutes to 30 minutes.

The caramelised olive fruit is caramelised while being agitated.

Optionally the caramelised olive fruit is caramelised while being constantly agitated.

In a process of the invention the caramelised olive fruit has a lower moisture content than the olive fruit provided in step (a). The lower moisture content of the caramelised olive fruit retards fermentation of the caramelised olive fruit during storage subsequent to the process of the invention.

In a process of the invention the caramelisation of olive fruit results in a reduction of moisture content of the caramelised olive fruit compared to the olive fruit provided in step (a).

In a process of the invention the caramelised olive fruit is heated (caramelised) until the caramelised olive fruit has a moisture content of from 6 wt% to 15 wt% as a percentage of the total weight of the caramelised olive fruit, the moisture content may be determined by thermogravimetric methods.

In a process of the invention the caramelised olive fruit is heated (caramelised) until the caramelised olive fruit may have a moisture content of from 6 wt% to 10 wt% as a percentage of the total weight of the caramelised olive fruit, the moisture content may be determined by thermogravimetric methods.

The caramelised olive fruit may be cooled subsequent to caramelisation. For example the caramelised olive fruit may be cooled for 1 minute to 120 minutes subsequent to the caramelisation, for example from 60 minutes to 120 minutes. Cooling the caramelised olive fruit subsequent to caramelisation allows for the caramelised olive fruit to be subsequently stored in a stable manner such as a manner which prevents fermentation during storage.

Advantageously the caramelised olive fruit may be separated from any contaminants which may be present in the caramelised olive fruit. The caramelised olive fruit may be passed through a screen or mesh prior to cooling. Alternatively the caramelised olive fruit may be passed through a screen or mesh while the caramelised olive fruit is cooling. Alternatively the caramelised olive fruit may be passed through a screen or mesh after cooling. The screen or mesh preferably has a mesh size of from 2mm to 10mm, preferably a mesh size of from 3mm to 9mm, wherein the mesh size defines the length and width of square apertures in the mesh. Advantageously passing the caramelised olive fruit through a screen or a mesh may remove any non-olive fruit contaminants which may have been present in the olive fruit. Advantageously passing the caramelised olive fruit through a screen or a mesh may remove olive stones (or pieces of olive stones) which may be present and may be too large to be considered easily digestible.

The caramelised olive fruit may be cooled to below 20° C subsequent to caramelisation.

Suitably the caramelised olive fruit is cooled to from 10° C and 20° C subsequent to caramelisation.

The present invention also provides a feedstock for animals which is made from olive waste according to the process of the invention. The feedstock of the present invention provides benefits such as nutritional benefits to the meat obtained from animals whose diet is supplemented with the feedstock.

Beef from cattle is the third most widely consumed meat in the world. The quality of beef is greatly affected by marbling, or the amount of intramuscular fat relative to muscle. With the feedstock of the present invention it is possible to achieve in the meat of an animal, to which the feedstock is fed, marbling which is derived from olives. This is considered to be a healthier option.

Waygu cattle are a breed of cattle originating from Japan. Meat from Waygu cattle is characterised by abundant marbling, or substantial amounts of intramuscular fat relative to muscle. Consumer concern related to foods with a high level of saturated fat in meat such as beef, for example beef derived from Waygu cattle, means that the high level of intramuscular fat in meat such as beef, for example beef derived from Wagyu cattle, may be of concern to some consumers. The present invention provides a feedstock which when fed to animals, such as cattle, for example Waygu cattle, leads to increased monounsaturated fats, such as oleic acid, and increased beneficial nutrients, such as glutamic acid and/or carnosine, being present in the meat of animals fed with the feedstock of the present invention compared to the meat of animals not fed with the feedstock of the present invention.

Olive oil is produced by pressing olives. A by-product of olive oil manufacture is olive waste. Olive waste may be in paste form. Olive waste comprises pressed olive pulp, pressed olive stone, and olive seeds. Pressed olive stone may be partially crushed. Partially crushed olive stone may release olive seeds. Olive stones in olive waste are not completely crushed and retain some olive seeds within the olive stones. The present invention may crush of mill the olive stones to completely release the olive seeds present in the olive stones.

Before the present invention olive waste has never been considered as an effective animal feeding product. Olive waste does however contain significant nutrients with the composition of the olive stone and olive seed indicating higher nutrient levels in concentrated oils that are 100 times stronger than traditional olive oil. Significant proteins are also contained in the olive stone and seeds making them a potential highly nutritious animal feedstock.

The invention of a method to process olive waste into a palatable feedstock for animals is thus advantageous. This alleviates a number of problems, with large potential positive effects on animal health, healthy human consumption of animal meat, the environment, pollution levels reducing resulting from waste disposal and logistics of trucking and transporting olive waste, increased commercial activity for olive oil manufacturers and more employment in the waste processing process and tax collection for olive oil producing regions which often suffer from poor economic conditions.

This is surprising as olive waste is not considered a viable feedstock for livestock as it is unpalatable for animals. Previous tests and studies have been performed in order to test the nutritional quality, digestibility and general benefits of olive waste on animals including cows and sheep. A United Nations study concludes that olive waste, the waste remaining after extracting olive oil, has a number of drawbacks for use as a feedstock for livestock regardless of production techniques. It is neither beneficial in increasing the weight of the animal or the health of the animal. It has low digestibility, and it is not palatable for the animal with many of the tests performed having to supplement the olive waste with molasses to make the olive waste somewhat more palatable to animals.

Not pertaining to the invention is a process for making a feedstock for animals may comprise:
a) providing a first pomace of olive pulp, olive stones, and olive seeds,
b) separating the olive pulp of the first pomace from the olive stones and olive seeds of the first pomace,
c) crushing the olive stones and olive seeds,
d) combining the olive pulp of the first pomace and crushed olive stones and crushed olives seeds to form a second pomace,
e) caramelising the second pomace. Desirably the caramelisation process causes caramelisation of the second olive pomace.

In any process of the invention the caramelisation temperature is from 110° C to 180° C and optionally the caramelisation is performed for 5 minutes to 80 minutes.

The second olive pomace is agitated during the caramelisation step. Suitably the second olive pomace is agitated for 20 to 40 minutes during the caramelisation step.

The present invention also relates to a feedstock for animals comprising a caramelised olive pomace wherein the caramelised olive fruit has a moisture content of from 6 wt % to 15 wt%. For palatability, digestibility, and safety it is desirable that the olive pomace is caramelised.

The caramelised olive pomace may formed by caramelization of an olive pomace comprising olive pulp and crushed olive stones and crushed olive seeds, at a temperature of from 110° C to 180° C.

The caramelised olive pomace may be formed by caramelising an olive pomace comprising olive pulp and crushed olive stones and olive seeds for 5 minutes to 80 minutes.

Desirably the caramelised olive pomace may be formed by caramelising an olive pomace comprising olive pulp and crushed olive stones and olive seeds for 5 minutes to 30 minutes.

The olive pomace comprising olive pulp and crushed olive stones and seeds is agitated during the caramelisation step.

Optionally the olive pomace comprising olive pulp and crushed olive stones and seeds is agitated constantly during the caramelisation step.

The caramelised olive pomace may be passively cooled by allowing it to cool or may be actively cooled. Optionally the caramelised olive pomace is cooled for 1 minute to 120 minutes.

The caramelised olive pomace may be cooled to below 20° C subsequent to caramelisation. The caramelised olive pomace may be cooled to from 10° C to 20° C subsequent to caramelisation.

Advantageously the caramelised olive fruit may be separated from any contaminants which may be present in the caramelised olive fruit. The caramelised olive fruit may be passed through a screen or mesh prior to cooling. Alternatively the caramelised olive fruit may be passed through a screen or mesh while the caramelised olive fruit is cooling. Alternatively the caramelised olive fruit may be passed through a screen or mesh after cooling. The screen or mesh preferably has a mesh size of from 2mm to 10mm, preferably a mesh size of from 3mm to 9mm, wherein the mesh size defines the length and width of square apertures in the mesh.

The present invention relates to the use of a feedstock of the invention comprising caramelised olive fruit wherein the caramelised olive fruit has a moisture content of from 6 wt % to 15 wt%, including a feedstock produced by a process of the invention. The use of the feedstock of the invention may increase at least one of: oleic acid, monounsaturated fatty acid, glutamic acid, or carnosine, in meat from an animal fed on the feedstock.

The present invention relates to the use of caramelised olive waste in the production of a feedstock for animals, in particular where the feedstock produces marbling in meat from the animals.

Desirably the feedstock produces marbling in meat from the animals which has a higher amount of oleic acid, monounsaturated fatty acid, glutamic acid, or carnosine than the marbling in the meat from animals wherein the feedstock was not used.

Also not pertaining to the invention is an apparatus for processing olive fruit for example olive waste comprising:
a) a separator, wherein the separator separates a first olive pulp from olive stones and olive seeds;
b) a crusher for crushing the olive stones and seeds;
c) a mixer for recombining the olive pulp and the crushed olive stone and seeds to form a second olive pomace.

The separator may be a screen that allows olive flesh to pass through but does not allow olive stones and olive seeds to pass through.

The crusher may be a milling unit that crushes or mills the olive stones and olive seeds.

The apparatus of the invention desirably further comprises
a cooker, for cooking the second olive pomace.

The apparatus of the invention desirably further comprises
a cooler, for cooling the cooked second olive pomace.

The apparatus of the invention desirably further comprises
a packager, for packaging the cooked second olive pomace into a package.

The cooker is optionally used to caramelise the second olive pomace as described above. For example the cooker may be at a temperature from 110° C to 180° C when cooking the second olive pomace. Suitably the cooker is at a temperature from 120° C to 180° C for 50 minutes to 80 minutes.

The cooker is configured to provide agitation to the second olive pomace during the cooking process. The cooker may be configured to provide constant agitation to the second olive pomace.

The cooked second olive pomace may cooled in the cooling unit for 60 minutes to 120 minutes.

### Brief Description of the Drawings

Embodiments of the invention will be described, by way of example only, with reference to the accompanying drawings in which:

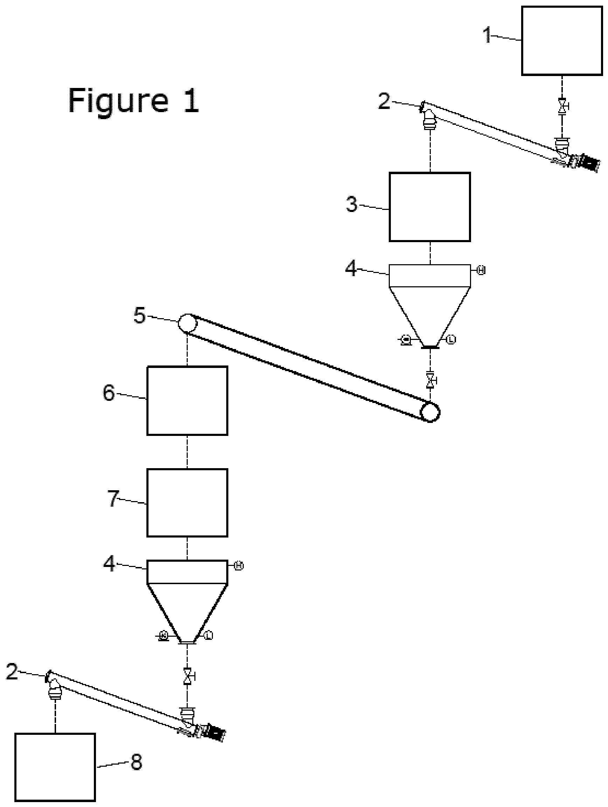

**Figure 1** shows a schematic of the process for making a feedstock for animals from olive waste.

### Detailed Description of the Drawings

The present disclosure describes a process of producing a feedstock for animals from olive fruit.

Olive pomace is an olive fruit which is a by-product of olive oil production and comprises olive pulp, olive stones and olive seeds. The first olive pomace is initially stored in a raw material storage container 1. The raw material storage container 1 is configured for holding a first pomace of olive pulp, olive stones, and olive seeds for the process of making a feedstock for animals according to the process of the present invention.

The olive pomace stored in raw material container 1 may have a moisture content of from 50 wt% to 75 wt% as a percentage of the total moisture content of the olive pomace as determined by a thermogravimetric method.

The moisture content of a material includes all of the volatile components which are emitted when a sample is heated. The moisture content of a sample is determined by thermogravimetric methods. Thermogravimetry is the process of determining the loss of mass that occurs when a substance is heated. The sample is weighed prior to being heated and after being heated and the difference between the two weights is calculated. The difference between the two weights is the moisture content.

Alternatively the moisture content of the olive pomace may be reduced prior to being stored in raw material container 1 in a separate/independent drying process which is separate/independent to the heat provided by the caramelisation process unit 7. The moisture content may be reduced by any means known in the art, for example the moisture content may be reduced by heating, or by freeze drying, or by spray drying. For example when the moisture content is reduced by the application of heat the moisture content of the olive pomace is sufficient to prevent caramelisation of the olive pomace during drying.

The moisture content of the olive pomace may be reduced prior to being stored in raw material container 1 to a moisture content of from 16 wt% to 49 wt%, preferably to a moisture content of from 18 wt% to 25 wt% as a percentage of the total weight of the olive pomace.

An olive fruit which is an olive pomace is provided within the storage container 1 is conveyed by means of a transfer screw conveyor 2 from the raw material storage container 1 to a screen 3. The screen 3 provides a means of separating the olive pulp of the first olive pomace from the olive stones and olive seeds of the first olive pomace. The milling/ crushing element 4 acts to crush the olive stones and olive seeds of the first pomace. The milling/ crushing element 4 completely crushes the olive stone which releases any olive seeds to form a crushed olive stones and olive seeds mixture.

The olive pulp of the first pomace and the crushed olive stones and olive seeds mixture are loaded into a holding hopper 5. The olive pulp of the first pomace and the crushed olive stones and olive seeds are thus combined in the holding hopper 5 to form a second pomace. The second pomace is emptied in a controlled manner from the holding hopper 5 onto a variable speed belt conveyor 6. The variable speed belt conveyor 6 conveys the second pomace to the caramelisation process unit 7.

The caramelisation process unit 7 acts to caramelise the second pomace by heat treatment by transferring heat from the caramelisation process unit 7 to the second olive pomace. Heat treatment above 90° C disrupts the protection and structure of the starch granules present in the second olive pomace favouring enzyme activity and nutrient digestibility of the final feedstock. Heat treatment above 110° C breaks down tannins present in the second olive pomace removing the bitter taste associated with tannins and improving the palatability of the final feedstock. Heat treatment above 110° C breaks down tannins present in the second olive pomace increasing the digestibility of the final feedstock. Desirably the caramelisation process unit 7 is heated to over 110° C while transferring heat to the second pomace. Suitably the caramelisation process unit 7 acts to caramelise the second olive pomace at a temperature above 110° C.

The caramelisation process unit 7 desirably causes caramelisation of the second pomace. Caramelisation is a non-enzymatic browning of sugar by the application of heat. Caramelisation is temperature dependent. Caramelisation temperature is further dependent on the type of sugar present. Fructose caramelises at 110° C. Galactose, glucose, and sucrose caramelise at 160° C. Maltose caramelises at 180° C. Caramelisation may improve the palatability of the final feedstock. The following flavours are created during the caramelisation process: Diacetyl (2, 3-butanedione) is an important flavour compound, produced during the first stages of caramelisation. Diacetyl is mainly responsible for a buttery or butterscotch flavour. Esters and lactones which have a sweet rum like flavour. Furans which have a nutty flavour. Maltol that has a toasty flavour. Desirably the caramelisation process unit 7 does not heat to over 180° C.

The caramelisation process unit 7 desirably does not cause a mutagenic effect on the second pomace. Mutagenic activity occurs in the second pomace at temperatures above 180° C. Mutagenic activity may have an adverse effect on the aroma and taste of the final feedstock reducing the palatability of the final feedstock. Mutagenic activity may have an adverse effect on the nutritional quality of the final feedstock. Mutagenic activity may lead to the production of carcinogens in the final feedstock. It is desirable that the caramelisation process unit 7 does not heat to over 180° C.

If caramelisation is allowed to proceed too far, by the application of excessive heat or heating for an excessive amount of time, the taste of the mixture will become less sweet as the original sugar is destroyed. Eventually the flavour will turn bitter and the palatability of the final feedstock will be adversely affected.

The caramelisation process unit 7 may be heated to a temperature of from 110° C to 180° C. Most preferably the caramelisation process unit is heated to a temperature of 140° C to 180° C. The caramelisation process unit 7 may maintain this temperature for from 5 and 80 minutes. Preferably the caramelisation process unit 7 may maintain this temperature for from 5 to 30 minutes. The caramelisation process unit 7 is configured to provide agitation to the second pomace while the second pomace is in the caramelisation process unit 7. The agitation may be constant while the second pomace is in the caramelisation process unit 7. The agitation may occur while the caramelisation process unit 7 is transferring heat to the second pomace. The agitation of the second olive pomace while in the caramelisation process unit 7 allows uniform heating of the second olive pomace. The uniform heating of the second olive pomace prevents burning of the second olive pomace during the transfer of heat from the caramelisation process unit 7 to the second olive pomace.

The second pomace which has undergone the process provided in the caramelisation process unit 7 is now a caramelised olive pomace.

The caramelised olive pomace has a reduced moisture content as compared to the moisture content of the olive pomace before the undergoing the process provided in the caramelisation process unit 7. The reduction in moisture content allows the caramelised olive pomace to have an improved shelf life. A caramelised olive pomace with high moisture content is prone to fermentation while in storage. A caramelised olive pomace which has too low a moisture content may lead to burning of the caramelised olive pomace and a reduction in the palatability of the feedstock.

The caramelised olive pomace has a moisture content of from 6 wt% to 15 wt% as a percentage of the total weight of the caramelised olive pomace as measured by thermogravimetric methods.

Desirably the caramelised olive pomace may have a moisture content from 6 wt% to 10 wt% as a percentage of the total weight of the caramelised olive pomace as measured by thermogravimetric methods.

The caramelised olive pomace may be transferred from the caramelisation process unit 7 to a cooler unit 8. The caramelised olive pomace may be cooled in the cooler unit 8 for at least 1 minutes. The caramelised olive pomace may be cooled in the cooler unit 8 for up to 120 minutes, for example from 1 minute to 120 minutes, for example for at least 60 minutes . The cooling may be active or passive.

Desirably the caramelised olive pomace is cooled to a temperature below 20° C, preferably the caramelised olive pomace is cooled to from 10° C to 20° C.

Advantageously the caramelised olive fruit may be separated from any contaminants which may be present in the caramelised olive fruit. The caramelised olive fruit may be passed through a screen or mesh prior to cooling. Alternatively the caramelised olive fruit may be passed through a screen or mesh while the caramelised olive fruit is cooling. Alternatively the caramelised olive fruit may be passed through a screen or mesh after cooling. The screen or mesh preferably has a mesh size of from 2mm to 10mm, preferably a mesh size of from 3mm to 9mm, wherein the mesh size defines the length and width of square apertures in the mesh. Advantageously passing the caramelised olive fruit through a screen or a mesh may remove any non-olive fruit contaminants which may have been present in the olive fruit. Advantageously passing the caramelised olive fruit through a screen or a mesh may remove olive stones which may be present and may be too large to be considered easily digestible. The caramelised olive pomace may be transferred from the cooling unit 8 to a holding hopper 9 where it may be stored. The caramelised olive pomace can be transferred to a packager which is in the form of a bagging plant 11 by means of the transfer screw conveyor 10.

The process of the present invention provides a method by which olive waste is processed into caramelised olive pomace which is a palatable feedstock for animals. The process of the present invention turns a waste product into a nutritious feedstock for animals.

### EXAMPLES

The feedstock produced by the process of the present invention provides nutritional benefits to the meat from animals fed with the feedstock.

A cow (F1) was fed normal feedstock comprising maize, straw and flaked barley over a 6 month period. A cow (Olive fed F1) was fed feedstock comprising maize, straw and flaked barley and additionally the feedstock of the present invention over a 6 month period. The weight of feed was kept equal for each animal so that the total by weight of flaked barley fed to F1 was equal to the total weight of flaked barley plus the feedstock of the present invention fed to olive fed F1.

The feedstock of the present invention was found to be palatable to the cattle to which it was fed. The feedstock of the present invention was digestible by the cattle. The cattle maintained healthy weight over the course of the 6 month feeding period with no difference observed between the F1 and Olive fed F1 cow weights (table 1).

The animals were slaughtered and the nutritional profile of the meat from the F1 animals was compared to that of the olive fed F1 animals.

The meat from animals fed with the olive waste feedstock of the present invention show increased levels of oleic acids, monounsaturated fatty acids, glutamic acid, and carnosine (table 2).

**Table 1 - weight of beef fed with olive waste feedstock**

| Month | F1 Olive/Barley Fed Weight of animal | Weight Gain Per Day | F1 Barley Fed Weight of animal | Weight Gain Per Day |
|---|---|---|---|---|
| Baseline | 500kg | NA | 505kg | NA |
| 1 | 530kg | 1kg | 535kg | 1kg |
| 2 | 564kg | 1.1kg | 572kg | 1.2kg |
| 3 | 601kg | 1.2kg | 609kg | 1.2kg |
| 4 | 642kg | 1.3kg | 646kg | 1.2kg |
| 5 | 682kg | 1.3kg | 683kg | 1.2kg |
| 6 | 719kg | 1.2kg | 720kg | 1.2kg |

**Table 2 - nutritional information of beef fed with olive waste feedstock**

| | F1 | Olive fed F1 | % Increase |
|---|---|---|---|
| Oleic acid (g/ 100g) | 36.76 | 40.92 | 11.3 |
| Monounsaturated fatty acids (g/ 100g) | 14.46 | 26.79 | 85.2 |
| Glutamic acid (g/ 100g) | 1.44 | 2.23 | 54.8 |
| Carnosine (g/ 100g) | 1.10 | 1.50 | 36.3 |

The feedstock of the present invention provides a palatable and nutritious feedstock for animals.

The feedstock of the present invention was produced by the process of the present invention using the parameters in table 3.

For examples 1 - 18 raw pomace was dried to give a pomace with a moisture content as shown in Table 3. For each example the specified quantity was caramelised at the specified temperature for the specified time. The final moisture content of the caramelised olive fruit was determined.

Moisture content was determined by thermogravimetric measurement using a Sartorius ^{®} MA35 Moisture Analyzer. Between 5g and 10g of pomace was analysed. The pomace was weighed to give a first weight. The pomace was heated to 100° C. The measurement was performed in fully automatic mode in which the analysis ends when the moisture loss reaches a steady state and no more moisture loss is measureable. The weight of the remaining pomace is measured and the moisture content is calculated as the amount of weight loss on heating as a percentage of the first pomace weight.

**Table 3 - Example processes and feedstocks of the present invention.**

| **Example** | **Dried Pomace Moisture wt%** | **Quantity KG** | **Max caramelisation unit Temperature (° C)** | **Time in minutes** | **Caramelised Olive pomace Moisture Content wt%** |
|---|---|---|---|---|---|
| **1** | **20.16%** | 200 | 180 | 11 | 9.86% |
| **2** | **20.16%** | 200 | 120 | 14 | 13.50% |
| **3** | **20.16%** | 200 | 180 | 11 | 10.62% |
| **4** | **20.16%** | 200 | 180 | 11 | 9.41% |
| **5** | **19.2%** | 200 | 130 | 16 | 11.00% |
| **6** | **19.2%** | 200 | 130 | 16 | 11.84% |
| **7** | **18.8%** | 200 | 130 | 16 | 9.06% |
| **8** | **18.8%** | 200 | 130 | 14.5 | 10.80% |
| **9** | **20.39%** | 200 | 130 | 17 | 10.49% |
| **10** | **20.39%** | 200 | 130 | 17 | 9.39% |
| **11** | **19.79%** | 200 | 130 | 17 | 10.35% |
| **12** | **19.79%** | 200 | 130 | 17 | 9.66% |
| **13** | **18.19%** | 200 | 130 | 16 | 9.49% |
| **14** | **18.19%** | 200 | 130 | 16 | 10.49% |
| **15** | **18.5%** | 200 | 130 | 16.6 | 9.71% |
| **16** | **18.5%** | 200 | 130 | 16.5 | 9.21% |
| **17** | **19.43%** | 200 | 130 | 16.5 | 9.49% |
| **18** | **19.43%** | 200 | 130 | 16.5 | 9.64% |

Example 1: Raw olive pomace was dried in a separate/independent drying process by heating to a temperature of 170° C to provide an olive pomace with a moisture content of 20.16 wt% as measured by thermogravimetric measurement. The moisture content of the olive pomace is sufficiently high to prevent the olive fruit from caramelising while drying at the drying temperature during the separate/independent drying process. 200kg of olive pomace with a moisture content of 20.16% was caramelised by the caramelisation process. The caramelisation process unit was heated to 180° C and the olive pomace was added to the caramelisation process unit. The maximum heat of the process unit was controlled to not exceed 180° C. The olive pomace had a residence time in the caramelisation process unit of 11 minutes, sufficient to cause caramelisation of the olive pomace. The olive pomace was agitated while in residence to prevent localised overheating of the olive pomace as localised overheating may cause the olive pomace to burn and become unpalatable. Caramelised olive pomace was removed from the caramelisation process unit. The caramelised olive fruit was passed through a screen with a mesh size of 3.2mm wherein each square of the mesh is 3.2mm in width and length. The caramelised olive pomace was actively cooled to a temperature of below 20° C using a blower which blows cyclones of cool air through the caramelised olive pomace. The moisture content of the caramelised olive pomace was determined as being 9.86 wt% using thermogravimetric measurement. The caramelised olive pomace was packaged and found to have good shelf life with no fermentation observed.

Examples 2 - 18: Examples 2-18 were performed as in example 1 with the processing parameters as disclosed in Table 3 to provide caramelised olive pomace with the moisture content as disclosed in Table 3.

The words "comprises/comprising" and the words "having/including" when used herein with reference to the present invention are used to specify the presence of stated features, integers, steps or components but do not preclude the presence or addition of one or more other features, integers, steps, components or groups thereof. Z The scope of protection is defined by the claims.

## Claims

1. A process of making a feedstock for animals comprising the following steps:
a. providing olive fruit,
b. drying the olive fruit to reduce the moisture content prior to caramelising the olive fruit, wherein said drying is carried out independently of caramelising the olive fruit,
c. caramelising the olive fruit,
wherein the olive fruit is caramelised by caramelisation at a temperature of from 110° C to 180° C,
wherein the olive fruit is caramelised while being agitated, and
wherein the olive fruit is caramelised until the caramelised olive fruit has a moisture content of from 6 wt% to 15 wt%.

2. The process of claim 1 wherein the olive fruit comprises olive flesh or olive pulp or olive stones or olive seeds or the olive fruit comprises any combination of olive flesh, olive pulp, olive stones, or olive seeds, for example the olive fruit is olive waste, preferably the olive waste comprises olive paste, preferably the olive waste is a by-product of olive oil manufacture, preferably the olive waste is olive pomace.

3. The process of any preceding claim wherein the olive fruit which is provided in step a. has a moisture content of from 50 wt% to 75 wt%.

4. The process of any preceding claim wherein in drying the olive fruit to reduce the moisture content wherein said drying is carried out independently of caramelising the olive fruit the moisture content of the olive fruit is reduced to from 16 wt% to 49 wt%, preferably the moisture content of the olive fruit is reduced to from 18 wt% to 25 wt%.

5. The process of any preceding claim wherein the olive fruit comprises olive stones, olive seeds and olive flesh, and the olive fruit is separated into (i) olive stones and olive seeds and (ii) olive flesh before the olive fruit is caramelised and optionally the olive stones and olive seeds are crushed before the olive fruit is caramelised and optionally the crushed olive stones and olive seeds are recombined with the olive flesh before the olive fruit is caramelised.

6. The process of any preceding claim wherein the caramelised olive fruit is caramelised by caramelisation at a temperature of from 140° C to 180° C.

7. The process of any preceding claim wherein the caramelised olive fruit is caramelised by caramelisation for 5 minutes to 80 minutes, preferably by caramelisation for 5 minutes to 30 minutes.

8. The process of any preceding claim wherein the caramelised olive fruit is caramelised while being constantly agitated.

9. The process of any preceding claim wherein the caramelised olive fruit is cooled subsequent to caramelisation, preferably the caramelised olive fruit is cooled for 1 minutes to 120 minutes subsequent to the caramelisation, preferably wherein the caramelised olive fruit is cooled to below 20° C subsequent to caramelisation, preferably the caramelised olive fruit is cooled to from 10° C and 20° C subsequent to caramelisation.

10. A feedstock for animals comprising caramelised olive fruit wherein the caramelised olive fruit has a moisture content of from 6 wt % to 15 wt%.

11. The feedstock of claim 10 wherein the caramelised olive fruit has a moisture content of from 6 wt% to 10 wt%.

12. The feedstock of claim 10 or 11 wherein the olive fruit comprises olive flesh or olive pulp or olive stones or olive seeds or wherein the olive fruit comprises any combination of olive flesh, olive pulp, olive stones, or olive seeds for example wherein the olive fruit is olive waste, preferably the olive waste is olive paste, preferably the olive waste is a by-product of olive oil extraction, preferably the olive waste is olive pomace.

13. Use of the feedstock produced by the process of any of claims 1 to 9 or the feedstock of any of claims 10 to 12 in feeding animals.

14. Use of the feedstock as claimed in claim 13 wherein the feedstock produces marbling in the meat from the animals which has a higher amount of oleic acid, monounsaturated fatty acid, glutamic acid, or carnosine than the marbling in the meat from animals wherein the feedstock was not used.

## Patentansprüche

1. Verfahren zur Herstellung eines Futtermittels für Tiere, wobei das Verfahren die folgenden Schritte aufweist:
a. Bereitstellen von Olivenfrucht,
b. Trocknen der Olivenfrucht zur Verringerung des Feuchtigkeitsgehalts vor einem Karamellisieren der Olivenfrucht, wobei das Trocknen unabhängig vom Karamellisieren der Olivenfrucht durchgeführt wird,
c. Karamellisieren der Olivenfrucht,
wobei die Olivenfrucht durch Karamellisierung bei einer Temperatur von 110° C bis 180° C karamellisiert wird,
wobei die Olivenfrucht unter Bewegung karamellisiert wird, und
wobei die Olivenfrucht karamellisiert wird, bis die karamellisierte Olivenfrucht einen Feuchtigkeitsgehalt von 6 Gew.-% bis 15 Gew.-% aufweist.

2. Verfahren nach Anspruch 1, wobei die Olivenfrucht Olivenfleisch oder Olivenpulpe oder Olivenkerne oder Olivensamen aufweist oder die Olivenfrucht eine beliebige Kombination aus Olivenfleisch, Olivenpulpe, Olivenkernen oder Olivensamen aufweist, beispielsweise ist die Olivenfrucht Olivenabfall, vorzugsweise weist der Olivenabfall Olivenpaste auf, vorzugsweise ist der Olivenabfall ein Nebenprodukt der Olivenölherstellung, vorzugsweise ist der Olivenabfall Oliventrester.

3. Verfahren nach einem der vorhergehenden Ansprüche, wobei die Olivenfrucht, die in Schritt a. bereitgestellt wird, einen Feuchtigkeitsgehalt von 50 Gew.-% bis 75 Gew.-% aufweist.

4. Verfahren nach einem der vorhergehenden Ansprüche, wobei beim Trocknen der Olivenfrucht zur Verringerung des Feuchtigkeitsgehalts, wobei das Trocknen unabhängig vom Karamellisieren der Olivenfrucht durchgeführt wird, der Feuchtigkeitsgehalt der Olivenfrucht auf 16 bis 49 Gew.-%, vorzugsweise auf 18 bis 25 Gew.-%, verringert wird.

5. Verfahren nach einem der vorhergehenden Ansprüche, wobei die Olivenfrucht Olivenkerne, Olivensamen und Olivenfleisch aufweist und die Olivenfrucht in (i) Olivenkerne und Olivensamen und (ii) Olivenfleisch getrennt wird, bevor die Olivenfrucht karamellisiert wird, und gegebenenfalls die Olivenkerne und Olivensamen vor dem Karamellisieren der Olivenfrucht zerkleinert werden und gegebenenfalls die zerkleinerten Olivenkerne und Olivensamen vor dem Karamellisieren der Olivenfrucht wieder mit dem Olivenfleisch vermischt werden.

6. Verfahren nach einem der vorhergehenden Ansprüche, wobei die karamellisierte Olivenfrucht durch Karamellisierung bei einer Temperatur von 140° C bis 180° C karamellisiert wird.

7. Verfahren nach einem der vorhergehenden Ansprüche, wobei die karamellisierte Olivenfrucht durch Karamellisieren für 5 Minuten bis 80 Minuten, vorzugsweise durch Karamellisieren für 5 Minuten bis 30 Minuten, karamellisiert wird.

8. Verfahren nach einem der vorhergehenden Ansprüche, wobei die karamellisierte Olivenfrucht unter ständiger Bewegung karamellisiert wird.

9. Verfahren nach einem der vorhergehenden Ansprüche, wobei die karamellisierte Olivenfrucht nach der Karamellisierung gekühlt wird, wobei die karamellisierte Olivenfrucht vorzugsweise nach der Karamellisierung für 1 Minute bis 120 Minuten gekühlt wird, wobei die karamellisierte Olivenfrucht nach der Karamellisierung vorzugsweise auf unter 20° C gekühlt wird, wobei die karamellisierte Olivenfrucht nach der Karamellisierung vorzugsweise auf 10° C bis 20° C gekühlt wird.

10. Futtermittel für Tiere, das karamellisierte Olivenfrucht aufweist, wobei die karamellisierte Olivenfrucht einen Feuchtigkeitsgehalt von 6 bis 15 Gew.-% hat.

11. Futtermittel nach Anspruch 10, wobei die karamellisierte Olivenfrucht einen Feuchtigkeitsgehalt von 6 Gew.-% bis 10 Gew.-% hat.

12. Futtermittel nach Anspruch 10 oder 11, wobei die Olivenfrucht Olivenfleisch oder Olivenpulpe oder Olivenkerne oder Olivensamen aufweist, oder wobei die Olivenfrucht eine beliebige Kombination aus Olivenfleisch, Olivenpulpe, Olivenkernen oder Olivensamen aufweist, wobei die Olivenfrucht beispielsweise Olivenabfall ist, vorzugsweise ist der Olivenabfall Olivenpaste, vorzugsweise ist der Olivenabfall ein Nebenprodukt der Olivenölgewinnung, vorzugsweise ist der Olivenabfall Oliventrester.

13. Verwendung des nach einem der Ansprüche 1 bis 9 hergestellten Futtermittels oder des Futtermittels nach einem der Ansprüche 10 bis 12 beim Füttern von Tieren.

14. Verwendung des Futtermittels nach Anspruch 13, wobei das Futtermittel eine Marmorierung im Fleisch der Tiere erzeugt, die eine höhere Menge an Ölsäure, einfach ungesättigter Fettsäure, Glutaminsäure oder Carnosin aufweist als die Marmorierung im Fleisch von Tieren, bei denen das Futtermittel nicht verwendet wurde.

## Revendications

1. Procédé de production de matière première pour animaux, comprenant les étapes suivantes :
a. fourniture d'olives,
b. séchage des olives pour réduire la teneur en humidité avant de caraméliser les olives, où ledit séchage est réalisé indépendamment de la caramélisation des olives,
c. caramélisation des olives, où les olives sont caramélisées par caramélisation à une température comprise entre 110 °C et 180 °C,
où les olives sont caramélisées sous agitation, et
où les olives sont caramélisées jusqu'à ce que les olives caramélisées présentent une teneur en humidité entre 6 % en poids et 15 % en poids.

2. Procédé de la revendication 1, dans lequel les olives comprennent de la chair d'olives ou de la pulpe d'olives ou des noyaux d'olives ou des graines d'olives, ou les olives comprennent toute combinaison de chair d'olives, de pulpe d'olives, de noyaux d'olives ou de graines d'olives, par exemple les olives sont des déchets d'olives, et de préférence les déchets d'olives comprennent de la pâte d'olive, de préférence les déchets d'olives sont un sous-produit de la production d'huile d'olive, de préférence les déchets d'olives sont des grignons d'olive.

3. Procédé de l'une des revendications précédentes, dans lequel les olives qui sont fournies dans l'étape a. présentent une teneur en humidité comprise entre 50 % en poids et 75 % en poids.

4. Procédé de l'une des revendications précédentes, dans lequel, lors du séchage des olives pour réduire la teneur en humidité, où ledit séchage est réalisé indépendamment de la caramélisation des olives, la teneur en humidité des olives est réduite à un pourcentage compris entre 16 % en poids et 49 % en poids, et de préférence la teneur en humidité des olives est réduite à un pourcentage compris entre 18 % en poids et 25 % en poids.

5. Procédé de l'une des revendications précédentes, dans lequel les olives comprennent des noyaux d'olives, des graines d'olives et de la chair d'olives, et les olives sont séparées en (i) noyaux d'olives et graines d'olives et (ii) chair d'olives avant que les olives soient caramélisées, et éventuellement les noyaux d'olives et les graines d'olives sont concassés avant que les olives soient caramélisées, et, en option, les noyaux d'olives et les graines d'olives concassés sont recombinés avec la chair d'olives avant que les olives soient caramélisées.

6. Procédé de l'une des revendications précédentes, dans lequel les olives caramélisées sont caramélisées par caramélisation à une température comprise entre 140 °C et 180 °C.

7. Procédé de l'une des revendications précédentes, dans lequel les olives caramélisées sont caramélisées par caramélisation pendant 5 minutes à 80 minutes, de préférence par caramélisation pendant 5 minutes à 30 minutes.

8. Procédé de l'une des revendications précédentes, dans lequel les olives caramélisées sont caramélisées en étant constamment agitées.

9. Procédé de l'une des revendications précédentes, dans lequel les olives caramélisées sont refroidies suite à la caramélisation, de préférence les olives caramélisées sont refroidies pendant 1 minute à 120 minutes suite à la caramélisation, de préférence dans lequel les olives caramélisées sont refroidies à moins de 20 °C suite à la caramélisation, et de préférence les olives caramélisées sont refroidies à une température comprise entre 10 °C et 20 °C suite à la caramélisation.

10. Matière première pour animaux, comprenant des olives caramélisées, dans laquelle les olives caramélisées ont une teneur en humidité comprise entre 6 % en poids et 15 % en poids.

11. Matière première de la revendication 10, dans laquelle les olives caramélisées ont une teneur en humidité comprise entre 6 % en poids et 10 % en poids.

12. Matière première de la revendication 10 ou 11, dans laquelle les olives comprennent de la chair d'olives ou de la pulpe d'olives ou des noyaux d'olives ou des graines d'olives, ou dans laquelle les olives comprennent toute combinaison de chair d'olives, de pulpe d'olives, de noyaux d'olives ou de graines d'olives, par exemple dans laquelle les olives sont des déchets d'olives, et de préférence les déchets d'olives sont de la pâte d'olive, de préférence les déchets d'olives sont un sous-produit de l'extraction d'huile d'olive, de préférence les déchets d'olives sont des grignons d'olive.

13. Utilisation de la matière première produite par le procédé de l'une des revendications 1 à 9 ou de la matière première de l'une des revendications 10 à 12 pour nourrir des animaux.

14. Utilisation de la matière première telle que revendiquée dans la revendication 13, dans laquelle la matière première produit dans la viande des animaux un marbrage qui a une teneur en acide oléique, en acides gras monoinsaturés, en acide glutamique ou en carnosine plus élevée qu'un marbrage dans la viande d'animaux pour lesquels la matière première n'a pas été utilisée.
